(19) Europäisches Patentamt
European Patent Office
Office européen des brevets

(11) EP 4 640 740 A1

(12) EUROPEAN PATENT APPLICATION
published in accordance with Art. 153(4) EPC

(43) Date of publication:
29.10.2025 Bulletin 2025/44

(21) Application number: 23907077.4

(22) Date of filing: 20.12.2023

(51) International Patent Classification (IPC):
*C08G 64/04* (2006.01) *C08G 63/64* (2006.01)
*C08G 63/199* (2006.01) *G02B 1/04* (2006.01)

(52) Cooperative Patent Classification (CPC):
C08G 63/199; C08G 63/64; C08G 64/04;
G02B 1/04

(86) International application number:
PCT/JP2023/045642

(87) International publication number:
WO 2024/135717 (27.06.2024 Gazette 2024/26)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 22.12.2022 JP 2022205312

(71) Applicant: MITSUBISHI GAS CHEMICAL COMPANY, INC.
Chiyoda-ku
Tokyo 100-8324 (JP)

(72) Inventors:
- KATO, Noriyuki
Tokyo 100-8324 (JP)
- NISHIMORI, Katsushi
Tokyo 125-8601 (JP)
- MOTEGI, Atsushi
Tokyo 125-8601 (JP)
- ISHIHARA, Kentaro
Tokyo 100-8324 (JP)
- ISHIKAWA, Shun
Kamisu-shi, Ibaraki 314-0102 (JP)
- MURATA SUZUKI, Shoko
Tokyo 125-8601 (JP)
- ARAI, Yuta
Tokyo 125-8601 (JP)
- SUGA, Tatsuya
Tokyo 125-8601 (JP)

(74) Representative: Hoffmann Eitle
Patent- und Rechtsanwälte PartmbB
Arabellastraße 30
81925 München (DE)

# (54) THERMOPLASTIC RESIN AND OPTICAL LENS INCLUDING SAME

(57) The present invention provides a thermoplastic resin including a structural unit (A) derived from a monomer represented by general formula (1). The thermoplastic resin according to an embodiment of the present invention includes a structural unit (B) derived from a monomer represented by general formula (6) and/or a structural unit (C) derived from a monomer represented by general formula (7).

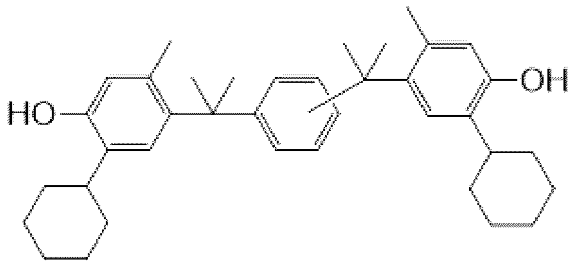

(1)

EP 4 640 740 A1

## Description

### TECHNICAL FIELD

The present invention relates to a thermoplastic resin and an optical lens including the same. More specifically, the present invention relates to a polycarbonate resin, a polyester carbonate resin or a polyester resin, and an optical lens including the same.

### BACKGROUND ART

As a material of optical lenses to be used in optical systems of various cameras such as cameras, film integrated type cameras and video cameras, an optical glass or an optical resin is used. Optical glasses are excellent in heat resistance, transparency, size stability, chemical resistance, etc., but have problems of high material costs, bad molding processability and low productivity.

Meanwhile, advantageously, optical lenses made of optical resins can be mass-produced by injection molding. As high refractive index materials for camera lenses, polycarbonate, polyester carbonate, polyester resins, etc. are used.

When using an optical resin as an optical lens, in addition to optical characteristics such as the refractive index and Abbe number, heat resistance, transparency, low water absorbability, chemical resistance, low birefringence, moist heat resistance, etc. are required. In particular, recently, optical lenses having a high refractive index and high heat resistance have been desired, and various resins have been developed (Patent Documents 1 to 5).

### PRIOR ART DOCUMENTS

### PATENT DOCUMENTS

Patent Document 1: Japanese Laid-Open Patent Publication No. 2018-2893
Patent Document 2: Japanese Laid-Open Patent Publication No. 2018-2894
Patent Document 3: Japanese Laid-Open Patent Publication No. 2018-2895
Patent Document 4: Japanese Laid-Open Patent Publication No. 2018-59074
Patent Document 5: WO2017/078073


### SUMMARY OF THE INVENTION

### PROBLEMS TO BE SOLVED BY THE INVENTION

The present invention addresses the problem of providing a thermoplastic resin, which is excellent in optical characteristics such as the refractive index, Abbe number and photoelastic coefficient and also excellent in heat resistance, and an optical lens obtained by using the same.

### MEANS FOR SOLVING THE PROBLEMS

The present inventors diligently made researches in order to solve the conventional problems and found that a thermoplastic resin excellent in optical characteristics such as the refractive index, Abbe number and photoelastic coefficient and also excellent in heat resistance is obtained by using, as a raw material, a monomer having a specific structure, and thus the present invention was achieved.

Specifically, the present invention includes aspects described below.

<1> A thermoplastic resin comprising a structural unit (A) derived from a monomer represented by formula (1):

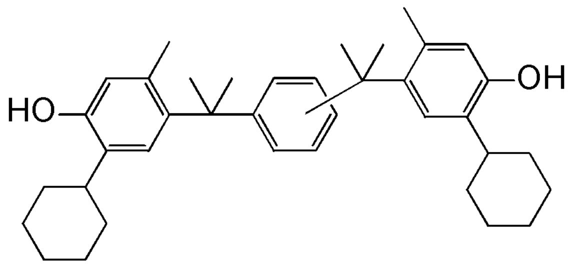

(1)

<2> The thermoplastic resin according to item <1>, wherein the monomer represented by formula (1) is a monomer represented by formula (5):

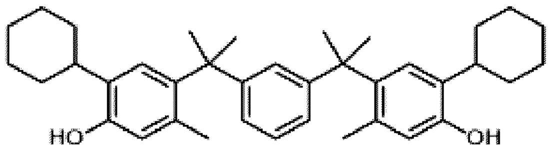

(5)

<3> The thermoplastic resin according to item <1> or <2>, which is a polycarbonate resin, a polyester carbonate resin, or a polyester resin.

<4> The thermoplastic resin according to any one of items <1> to <3>, which comprises a structural unit (B) derived from a monomer represented by general formula (6) and/or a structural unit (C) derived from a monomer represented by general formula (7):

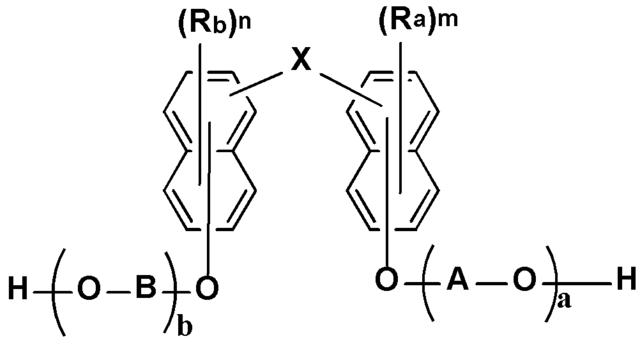

(6)

wherein in general formula (6):

$R_a$ and $R_b$ are each independently selected from the group consisting of a hydrogen atom;
a halogen atom; a substituted or unsubstituted alkyl group having 1 to 20 carbon atoms;
a substituted or unsubstituted alkoxyl group having 1 to 20 carbon atoms; a substituted or unsubstituted cycloalkyl group having 5 to 20 carbon atoms; a substituted or unsubstituted cycloalkoxyl group having 5 to 20 carbon atoms; a substituted or unsubstituted aryl group having 6 to 20 carbon atoms; a substituted or unsubstituted heteroaryl group having 6 to 20 carbon atoms which contains at least one heterocyclic atom selected from O, N and S;
a substituted or unsubstituted aryloxy group having 6 to 20 carbon atoms; and $-C{\equiv}C-R_h$;
$R_h$ represents a substituted or unsubstituted aryl group having 6 to 20 carbon atoms, or a substituted or unsubstituted heteroaryl group having 6 to 20 carbon atoms which contains at least one heterocyclic atom selected from O, N and S;
X represents a single bond or a substituted or unsubstituted fluorene group;
A and B each independently represent a substituted or unsubstituted alkylene group having 1 to 5 carbon atoms;
m and n each independently represent an integer of 0 to 6; and
a and b each independently represent an integer of 0 to 10,

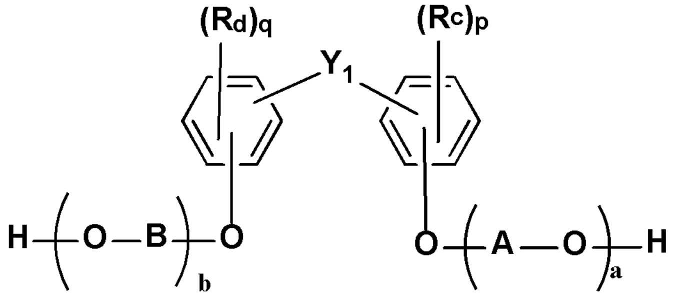

(7)

wherein in general formula (7):

$R_c$ and $R_d$ are each independently selected from the group consisting of a hydrogen atom, a halogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, a substituted or unsubstituted cycloalkoxyl group having 5 to 20 carbon atoms, and a substituted or unsubstituted aryl group having 6 to 20 carbon atoms;

$Y_1$ represents a single bond, a substituted or unsubstituted fluorene group, or any one of structural formulae represented by formulae (8) to (15):

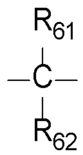 $-S-$ 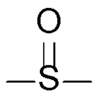 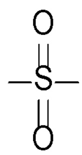 $-(CH_2)_r-$ $-O-$

(8) (9) (10) (11) (12) (13)

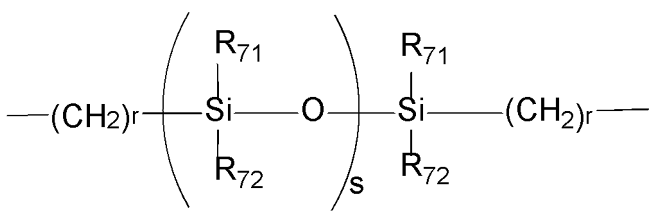

(14)

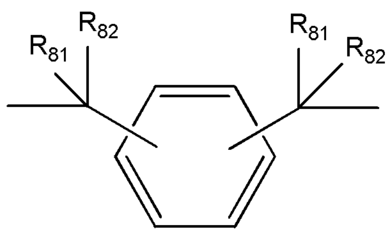

(15)

wherein in formulae (8) to (15):

$R_{61}$, $R_{62}$, $R_{71}$, $R_{72}$, $R_{81}$ and $R_{82}$ each independently represent a hydrogen atom, a halogen atom, a substituted or unsubstituted alkyl group having 1 to 20 carbon atoms, or a substituted or unsubstituted aryl group having 6 to 30 carbon atoms, or represent a substituted or unsubstituted carbocyclic ring or heterocyclic ring having 1 to 20 carbon atoms, wherein $R_{61}$ and $R_{62}$, or $R_{71}$ and $R_{72}$, are bonded to each other, and

r and s each independently represent an integer of 0 to 5000;

A and B each independently represent a substituted or unsubstituted alkylene group having 1 to 5 carbon atoms;

p and q each independently represent an integer of 0 to 4; and
a and b each independently represent an integer of 0 to 10.

<5> The thermoplastic resin according to item <4>, wherein in general formula (6) and general formula (7), A and B each independently represent an alkylene group having 2 or 3 carbon atoms.
<6> The thermoplastic resin according to item <4> or <5>, which comprises at least a structural unit derived from any one of BPEF, BNE, BNEF, DPBHBNA, BPM and BCFL.
<7> The thermoplastic resin according to any one of items <1> to <6>, which further comprises a structural unit derived from at least one monomer selected from the group of monomers below:

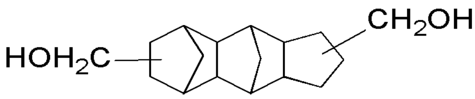
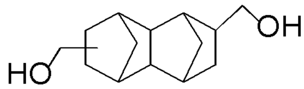

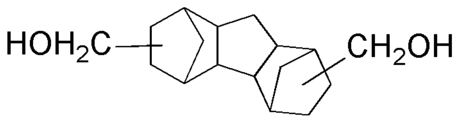
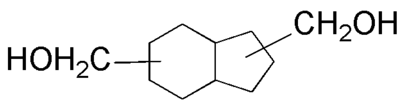

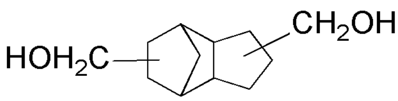
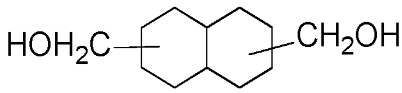

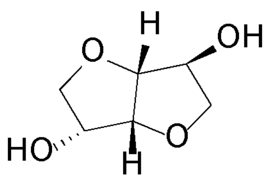
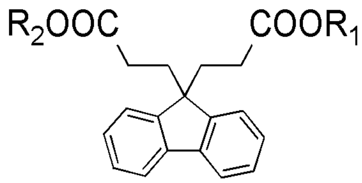

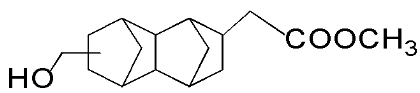
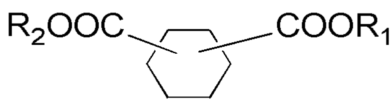

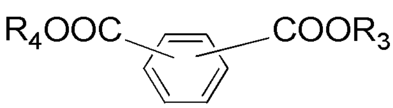
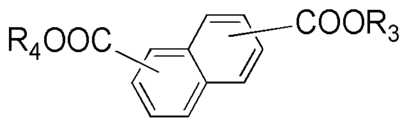

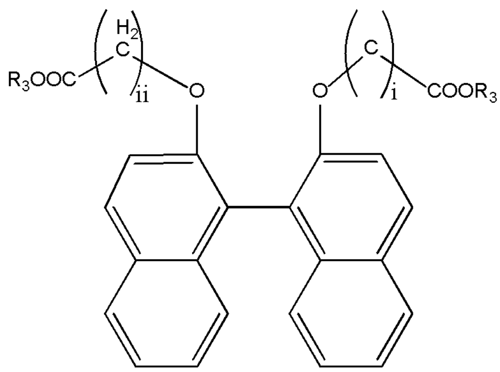

wherein in the formulae: $R_1$ and $R_2$ each independently represent a hydrogen atom, a methyl group or an ethyl group; $R_3$ and $R_4$ each independently represent a hydrogen atom, a methyl group, an ethyl group or an alkylene glycol having 2 to 5 carbon atoms; and i and ii each independently represent an integer of 1 to 3.
<8> The thermoplastic resin according to any one of items <1> to <7>, wherein the polystyrene-equivalent weight-average molecular weight (Mw) of the thermoplastic resin is 10,000 to 100,000.

<9> The thermoplastic resin according to any one of items <1> to <8>, wherein the refractive index (nD) of the thermoplastic resin is 1.500 to 1.700.
<10> The thermoplastic resin according to any one of items <1> to <9>, wherein the Abbe number (ν) of the thermoplastic resin is 22.0 to 35.0.
<11> The thermoplastic resin according to any one of items <1> to <10>, wherein the glass transition temperature of the thermoplastic resin is 135 to 160°C.
<12> The thermoplastic resin according to any one of items <1> to <11>, wherein the photoelastic coefficient of the thermoplastic resin is 25 to 45.
<13> The thermoplastic resin according to any one of items <1> to <12>, wherein the water absorption rate of the thermoplastic resin is 0.10 to 0.50%.
<14> The thermoplastic resin according to any one of items <1> to <13>, wherein the dimensional change rate at the time of water absorption of the thermoplastic resin is -0.1 to 0.10%.
<15> An optical lens comprising the thermoplastic resin according to any one of items <1> to <14>.

ADVANTAGEOUS EFFECT OF THE INVENTION

According to the present invention, it is possible to provide a thermoplastic resin, which is excellent in optical characteristics such as the refractive index, Abbe number and photoelastic coefficient and also excellent in heat resistance, and an optical lens including the same.

EMBODINETS FOR CARRYING OUT THE INVENTION

Hereinafter, the present invention will be described in detail by way of synthesis examples, working examples, etc., but the present invention is not limited thereto and can be arbitrarily changed and then practiced within a range not departing from the gist of the present invention.

<Thermoplastic Resin>

One embodiment of the present invention is a thermoplastic resin including a structural unit (A) derived from a monomer represented by formula (1):

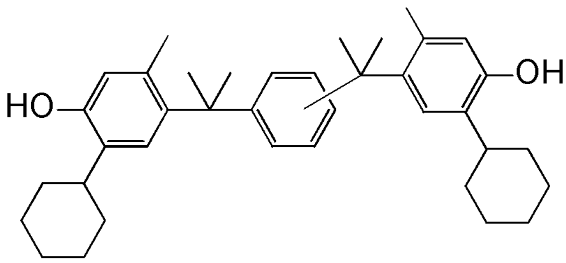

(1)

In a preferred embodiment of the present invention, the monomer represented by formula (1) is a monomer represented by formula (5):

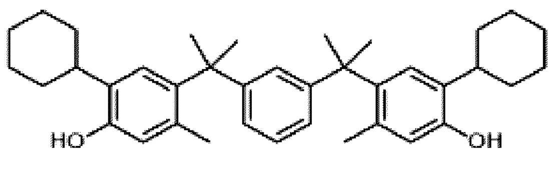

(5)

As the monomer represented by formula (1), a commercially available product may be used, or a product prepared by the method described in Japanese Patent No. 3673574 may be used.
The thermoplastic resin according to one embodiment of the present invention is not particularly limited, and examples thereof include a polyester resin, a polycarbonate resin, a polyester carbonate resin, an epoxy resin, a polyurethane resin, a polyacrylate resin, and a polymethacrylate resin. Preferably, the thermoplastic resin is a polycarbonate resin, a polyester carbonate resin or a polyester resin, and more preferably, the thermoplastic resin includes a structural unit (A) represented by formula below:

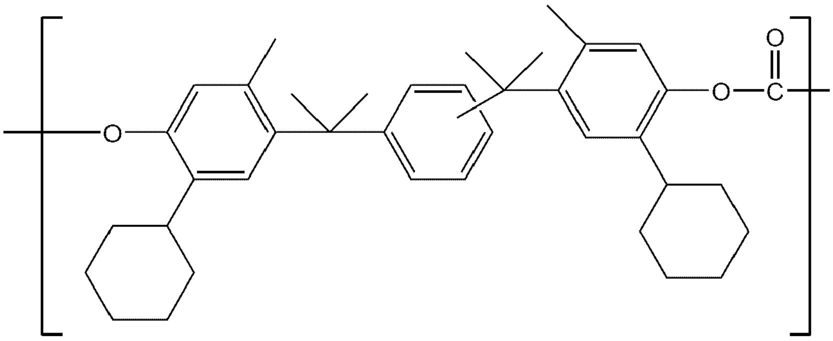

(A)

The ratio of the structural unit (A) represented by formula above in all the structural units in the thermoplastic resin according to one embodiment of the present invention is not particularly limited, but it is preferably 1 to 80 mol%, more preferably 1 to 60 mol%, and particularly preferably 5 to 50 mol%. Further, in another embodiment of the present invention, the ratio of the structural unit (A) represented by formula above in all the structural units is preferably 30 to 80 mol%, more preferably 40 to 80 mol%, and particularly preferably 50 to 70 mol%.

That is, the thermoplastic resin according to one embodiment of the present invention may include, in addition to the structural unit (A) represented by formula above, a structural unit derived from an aliphatic dihydroxy compound and a structural unit derived from an aromatic dihydroxy compound, which are generally used as a structural unit of a polycarbonate resin or polyester carbonate resin.

Specifically, examples of the aliphatic dihydroxy compound include various substances, and particularly include 1,4-cyclohexanedimethanol, tricyclodecanedimethanol, 1,3-adamantanedimethanol, 2,2-bis(4-hydroxycyclohexyl)-propane, 3,9-bis(2-hydroxy-1,1-dimethylethyl)-2,4,8,10-tetraoxaspiro[5.5]undecane, 2-(5-ethyl-5-hydroxymethyl-1,3-dioxan-2-yl)-2-methylpropan-1-ol, isosorbide, 1,3-propanediol, 1,4-butanediol, and 1,6-hexanediol.

Examples of the aromatic dihydroxy compound include various substances, and particularly include 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)oxide, bis(4-hydroxyphenyl)sulfide, bis(4-hydroxyphenyl)sulfone, bis(4-hydroxyphenyl)sulfoxide, bis(4-hydroxyphenyl)ketone, and bisphenoxyethanol fluorene.

Further, according to one embodiment of the present invention, the thermoplastic resin preferably includes a structural unit (B) derived from a monomer represented by general formula (6):

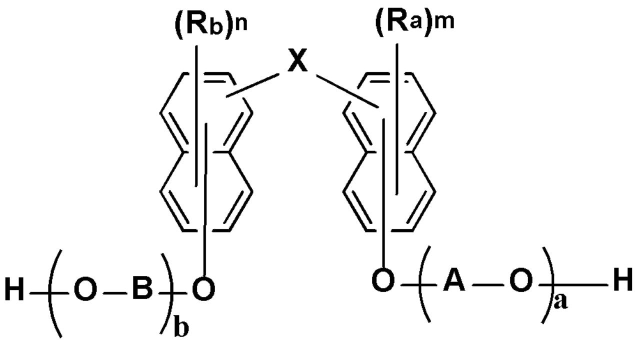

(6)

In general formula (6), $R_a$ and $R_b$ are each independently selected from the group consisting of a halogen atom; a substituted or unsubstituted alkyl group having 1 to 20 carbon atoms; a substituted or unsubstituted alkoxyl group having 1 to 20 carbon atoms; a substituted or unsubstituted cycloalkyl group having 5 to 20 carbon atoms; a substituted or unsubstituted cycloalkoxyl group having 5 to 20 carbon atoms; a substituted or unsubstituted aryl group having 6 to 20 carbon atoms; a substituted or unsubstituted heteroaryl group having 6 to 20 carbon atoms which contains at least one heterocyclic atom selected from O, N and S; a substituted or unsubstituted aryloxy group having 6 to 20 carbon atoms; and $-C\equiv C-R_h$. $R_h$ represents a substituted or unsubstituted aryl group having 6 to 20 carbon atoms, or a substituted or unsubstituted heteroaryl group having 6 to 20 carbon atoms which contains at least one heterocyclic atom selected from O, N and S.

$R_a$ and $R_b$ are preferably a hydrogen atom, a substituted or unsubstituted aryl group having 6 to 20 carbon atoms, or a substituted or unsubstituted heteroaryl group having 6 to 20 carbon atoms which contains at least one heterocyclic

atom selected from O, N and S, more preferably a hydrogen atom or a substituted or unsubstituted aryl group having 6 to 20 carbon atoms, and even more preferably a hydrogen atom or a substituted or unsubstituted aryl group having 6 to 12 carbon atoms.

In general formula (6), X represents a single bond or a substituted or unsubstituted fluorene group. X is preferably a single bond or a substituted or unsubstituted fluorene group having a total carbon number of 12 to 20.

In general formula (6), A and B each independently represent a substituted or unsubstituted alkylene group having 1 to 5 carbon atoms, and preferably an alkylene group having 2 or 3 carbon atoms.

In general formula (6), m and n each independently represent an integer of 0 to 6, preferably an integer of 0 to 3, and more preferably 0 or 1.

In general formula (6), a and b each independently represent an integer of 0 to 10, preferably an integer of 1 to 3, and more preferably 1 or 2.

Specific examples of the structural unit (B) include structural units derived from 2,2'-bis(2-hydroxyethoxy)-1,1'-binaphthalene (BNE), DPBHBNA, etc.

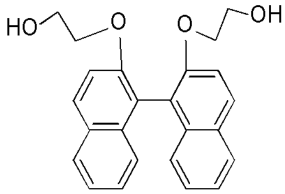
(BNE)
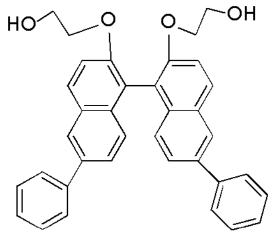
(DPBHBNA)

Further, according to one embodiment of the present invention, the thermoplastic resin preferably has a structural unit (C) derived from a monomer represented by general formula (7):

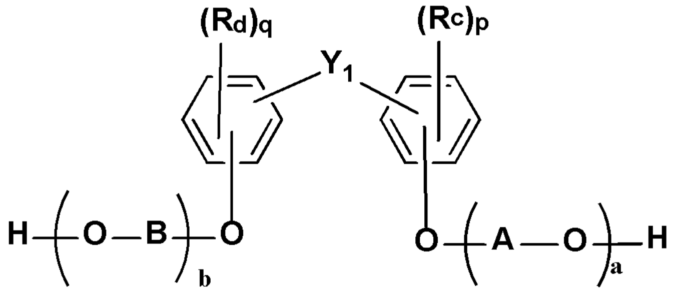
(7)

In general formula (7), $R_c$ and $R_d$ are each independently selected from the group consisting of a halogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, a substituted or unsubstituted cycloalkoxyl group having 5 to 20 carbon atoms, and a substituted or unsubstituted aryl group having 6 to 20 carbon atoms.

$R_c$ and $R_d$ are preferably a hydrogen atom, a substituted or unsubstituted aryl group having 6 to 20 carbon atoms, or a substituted or unsubstituted heteroaryl group having 6 to 20 carbon atoms which contains at least one heterocyclic atom selected from O, N and S, more preferably a hydrogen atom or a substituted or unsubstituted aryl group having 6 to 20 carbon atoms, and even more preferably a hydrogen atom or a substituted or unsubstituted aryl group having 6 to 12 carbon atoms.

In general formula (7), $Y_1$ represents a single bond, a substituted or unsubstituted fluorene group, or any one of structural formulae represented by formulae (8) to (15), and preferably a single bond or a structural formula represented by formula (8).

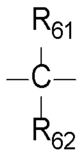 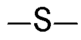 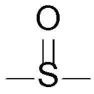 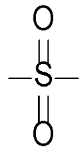 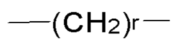 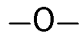

(8) (9) (10) (11) (12) (13)

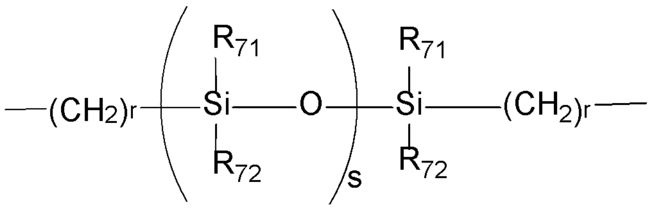

(14)

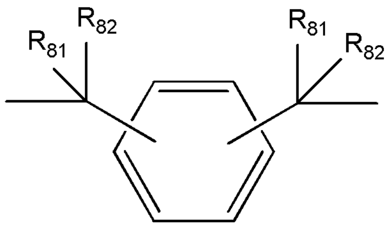

(15)

In formulae (8) to (15), $R_{61}$, $R_{62}$, $R_{71}$, $R_{72}$, $R_{81}$ and $R_{82}$ each independently represent a hydrogen atom, a halogen atom, a substituted or unsubstituted alkyl group having 1 to 20 carbon atoms, or a substituted or unsubstituted aryl group having 6 to 30 carbon atoms, or represent a substituted or unsubstituted carbocyclic ring or heterocyclic ring having 1 to 20 carbon atoms, wherein $R_{61}$ and $R_{62}$, or $R_{71}$ and $R_{72}$, are bonded to each other.

In formulae (8) to (15), r and s each independently represent an integer of 0 to 5000.

In general formula (7) above, A and B each independently represent a substituted or unsubstituted alkylene group having 1 to 5 carbon atoms, and preferably an alkylene group having 2 or 3 carbon atoms. In general formula (7), p and q each independently represent an integer of 0 to 4, and preferably 0 or 1. Further, in general formula (7), a and b each independently represent an integer of 0 to 10, preferably an integer of 0 to 5, more preferably an integer of 0 to 2, and for example, 0 or 1.

Specific examples of the structural unit (C) include structural units derived from BCFL (9,9-bis(4-hydroxy-3-methylphenyl)fluorene), BPEF (9,9-bis(4-(2-hydroxyethoxy)phenyl)fluorene), BPPEF (9,9-bis(4-(2-hydroxyethoxy)-3-phenylphenyl)fluorene), BNEF (9,9-bis[6-(2-hydroxyethoxy)naphthalen-2-yl]fluorene), bisphenol A, bisphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M (BPM), bisphenol S, bisphenol P, bisphenol PH, bisphenol TMC, bisphenol P-AP (4,4'-(1-phenylethylidene)bisphenol), bisphenol P-CDE (4,4'-cyclododecylidene bisphenol), bisphenol P-HTG (4,4'-(3,3,5-trimethylcyclohexylidene)bisphenol), bisphenol P-MIBK (4,4'-(1,3-dimethylbutylidene)bisphenol), bisphenol PEO-FL (bisphenoxyethanol fluorene), bisphenol P-3MZ (4-[1-(4-hydroxyphenyl)-3-methylcyclohexyl]phenol), bisphenol OC-FL (4,4'-[1-[4-[1-(4-hydroxyphenyl)-1-methylethyl]phenyl]ethylidene]bisphenol), bisphenol Z, BP-2EO (2,2'-[[1,1'-biphenyl]-4,4'-diylbis(oxy)bisethanol), S-BOC (4,4'-(1-methylethylidene)bis(2-methylphenol)), TrisP-HAP (4,4',4"-ethylidene trisphenol), or the like. Among them, structural units derived from BPEF, BNEF, BPM or BCFL are preferred examples of the structural unit (C).

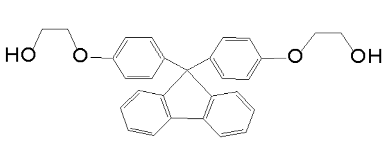

(BPEF)

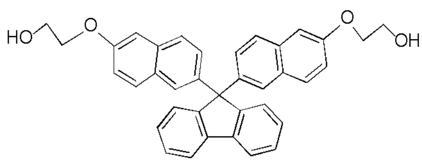

(BNEF)

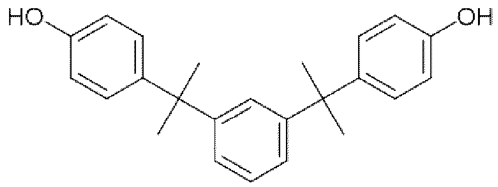

(BPM)

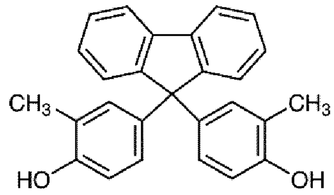

(BCFL)

According to one embodiment of the present invention, the thermoplastic resin may include a structural unit derived from a monomer represented by general formula (1).

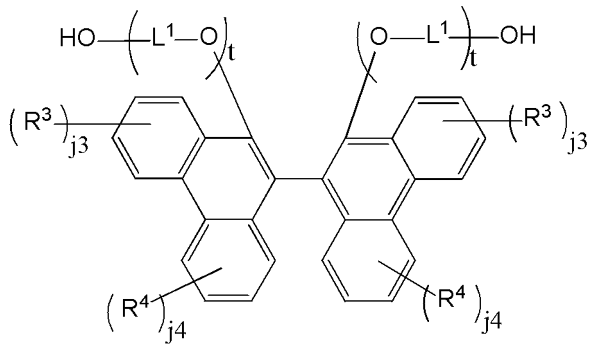

(1)

In general formula (1):

each $L^1$ independently represents a divalent linking group;
$R_3$ and $R_4$ each independently represent a halogen atom or a substituent having 1 to 20 carbon atoms which may contain an aromatic group;
j3 and j4 each independently represent an integer of 0 to 4; and
t represents an integer of 0 or 1.

While the structural unit (A) is essential to the thermoplastic resin according to one embodiment of the present invention, the thermoplastic resin may be a polymer that includes the structural unit (B) but not the structural unit (C), a polymer that includes the structural unit (C) but not the structural unit (B), a copolymer having the structural unit (B) and the structural unit (C), a mixture of a polymer having the structural unit (B) and a polymer having the structural unit (C), or a combination thereof. Examples of the polymer that includes the structural unit (C) but not the structural unit (B) include those having the structural units represented by formulae (I-1) to (I-3) below. Examples of the copolymer having the structural unit (B) and the structural unit (C) include those having the structural units represented by formulae (II-1) to (II-4) below.

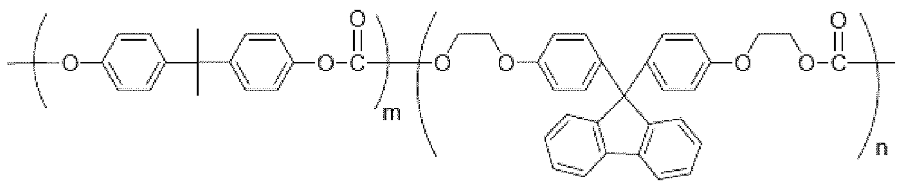

(I－1)

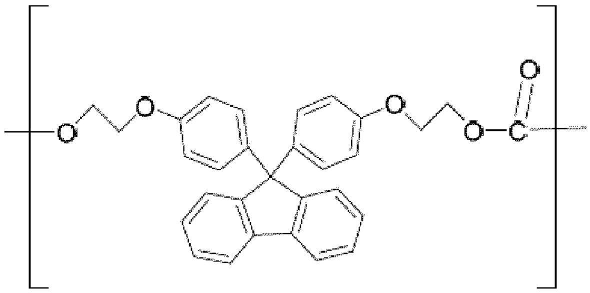

(I-2)

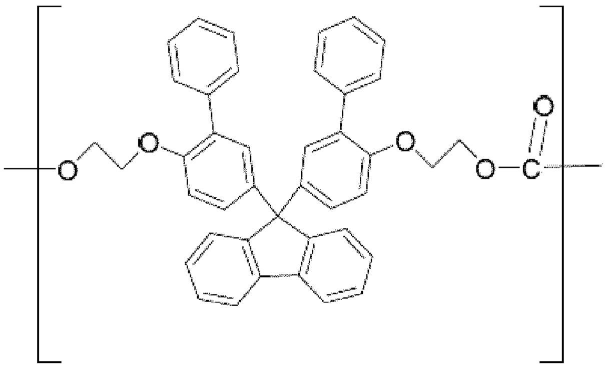

(I-3)

(In formula (I-1), m and n each independently represent an integer of 1 to 10, preferably an integer of 1 to 5, and more preferably 1, and
the number of repeating units of formula (I-3) is an integer of 1 to 10, preferably an integer of 1 to 5, and more preferably 1.)

Although either a block copolymer or a random copolymer, in which the values of m and n are high (e.g., 100 or higher), can be used as a polymer having a plurality of types of structural units, it is preferable to use a random copolymer, and it is more preferable to use a random copolymer in which m and n are 1.

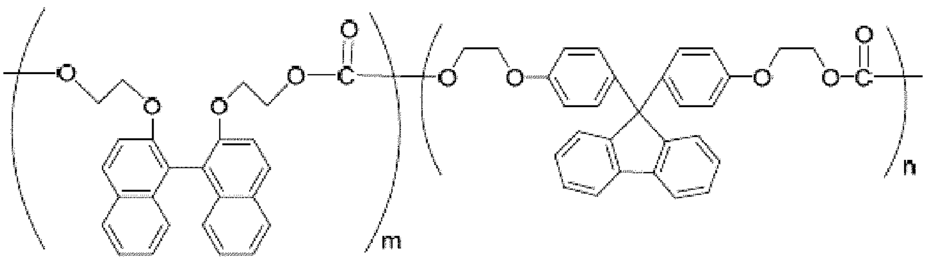

(II-1)

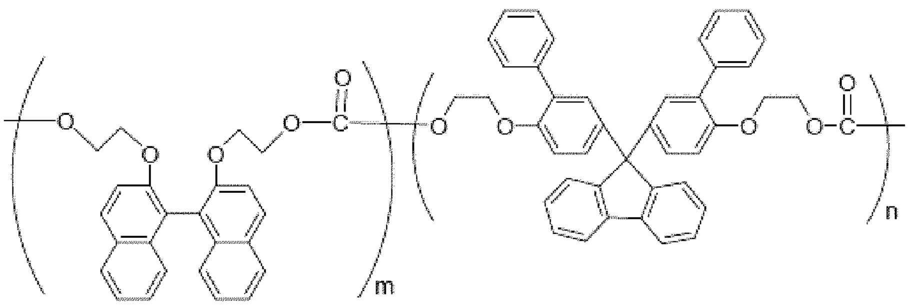

(II-2)

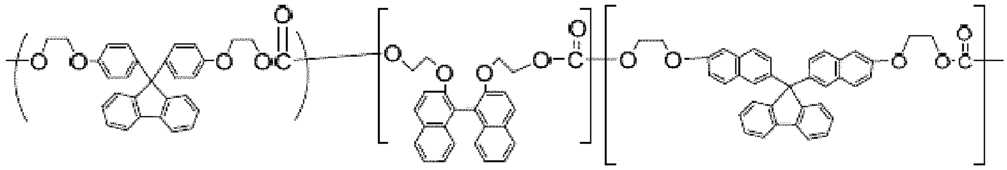

(I I－3)

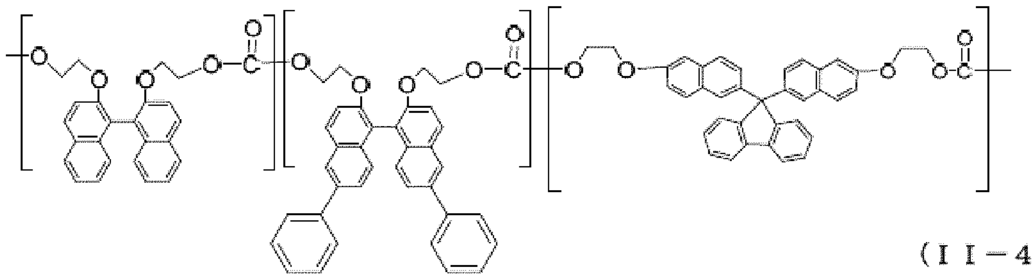

(I I－4)

(In formulae (II-1) to (II-4), m and n each independently represent an integer of 1 to 10, preferably an integer of 1 to 5, and more preferably 1.)

Although either a block copolymer or a random copolymer, in which the values of m and n are high (e.g., 100 or higher), can be used as a polymer having a plurality of types of structural units, it is preferable to use a random copolymer, and it is more preferable to use a random copolymer in which m and n are 1.

In the copolymer, the molar ratio between the structural unit (B) and the structural unit (C) is preferably 1:99 to 99:1, more preferably 10:90 to 90:10, even more preferably 15:85 to 85:15, and particularly preferably 30:70 to 70:30. Further, in the mixture, the mass ratio between the polymer having the structural unit (B) and the polymer having the structural unit (C) is preferably 1:99 to 99:1, more preferably 10:90 to 90:10, even more preferably 15:85 to 85:15, and particularly preferably 30:70 to 70:30.

The thermoplastic resin according to one embodiment of the present invention preferably further includes a structural unit derived from at least one monomer selected from the group of monomers below.

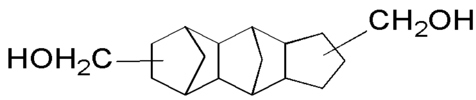
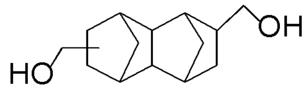

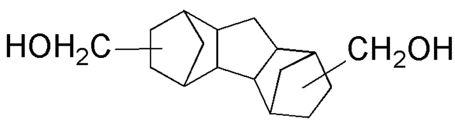
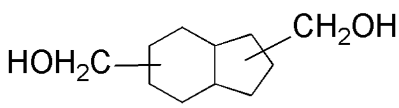

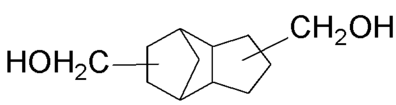
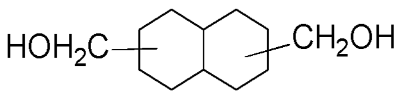

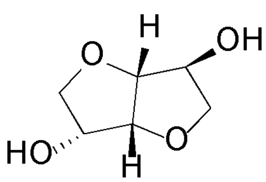
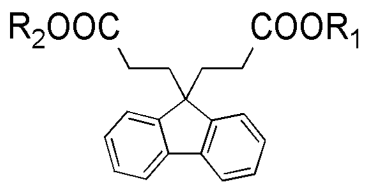

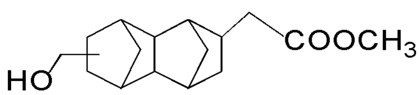
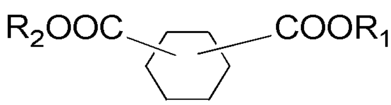

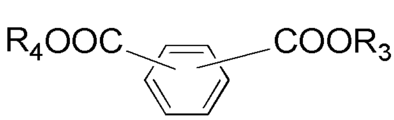
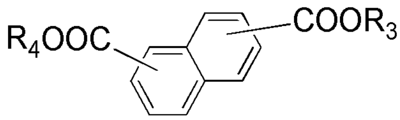

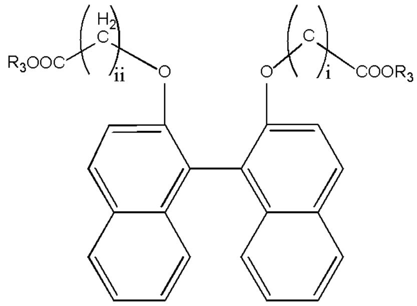

(In the formulae above, $R_1$ and $R_2$ each independently represent a hydrogen atom, a methyl group or an ethyl group, and $R_3$ and $R_4$ each independently represent a hydrogen atom, a methyl group, an ethyl group or an alkylene glycol having 2 to 5 carbon atoms. i and ii each independently represent an integer of 1 to 3.)

In the polycarbonate resin according to a preferred embodiment of the present invention, an alcohol-based compound such as a phenolic compound that may be produced as a by-product at the time of the production and a diol component or carbonic acid diester that is unreacted and remains may be present as impurities.

The alcohol-based compound such as the phenolic compound and carbonic acid diester as impurities may cause reduction in the strength of a molded body and odor generation, and for this reason, it is preferred that the contents thereof are as low as possible.

The content of a remaining phenolic compound is preferably 3000 mass ppm or less, more preferably 1000 mass ppm or less, and particularly preferably 300 mass ppm or less relative to 100% by mass of the polycarbonate resin.

The content of a remaining diol component is preferably 1000 mass ppm or less, more preferably 100 mass ppm or less, and particularly preferably 10 mass ppm or less relative to 100% by mass of the polycarbonate resin.

The content of a remaining carbonic acid diester is preferably 1000 mass ppm or less, more preferably 100 mass ppm or less, and particularly preferably 10 mass ppm or less relative to 100% by mass of the polycarbonate resin.

It is particularly preferred that the contents of compounds including phenol and t-butylphenol are low, and the contents of these compounds are preferably within the above-described ranges.

The content of the remaining phenolic compound in the polycarbonate resin can be measured according to a technique in which the phenolic compound extracted from the polycarbonate resin is analyzed using gas chromatography.

Similarly, the content of the remaining alcohol-based compound in the polycarbonate resin can be measured according to a technique in which the alcohol-based compound extracted from the polycarbonate resin is analyzed using gas chromatography.

Similarly, the contents of the remaining diol component and carbonic acid diester in the polycarbonate resin can be measured according to a technique in which these compounds are extracted from the polycarbonate resin and analyzed using gas chromatography.

The contents of the by-product alcohol-based compound such as the phenolic compound, the diol component and carbonic acid diester may be reduced to an undetectable level, but from the viewpoint of the productivity, slight amounts of these substances may be contained within a range in which effects are not reduced. Further, when slight amounts of these substances are contained, satisfactory plasticity can be obtained at the time of melting the resin.

The content of each of the remaining phenolic compound, diol component and carbonic acid diester may be, for example, 0.01 mass ppm or more, 0.1 mass ppm or more, or 1 mass ppm or more relative to 100% by mass of the polycarbonate resin.

The content of the remaining alcohol-based compound may be, for example, 0.01 mass ppm or more, 0.1 mass ppm or more, or 1 mass ppm or more relative to 100% by mass of the polycarbonate resin.

Note that the contents of the by-product alcohol-based compound such as the phenolic compound, the diol component and carbonic acid diester in the polycarbonate resin can be adjusted to be within the above-described ranges by suitably adjusting conditions for polycondensation and settings of apparatuses. The adjustment can also be carried out by changing conditions for the extrusion process after polycondensation.

For example, the remaining amount of the by-product alcohol-based compound such as the phenolic compound is associated with the type of the carbonic acid diester to be used for the polymerization of the polycarbonate resin, the polymerization reaction temperature, the polymerization pressure, etc. By changing these conditions, the remaining amount of the by-product alcohol-based compound such as the phenolic compound can be reduced.

For example, when a polycarbonate resin is produced using a dialkyl carbonate such as a diethyl carbonate, the molecular weight is not easily increased, resulting in a low-molecular-weight polycarbonate, and the content of a by-produced alkyl alcohol-based compound tends to be higher. Such an alkyl alcohol has high volatility, and when it is remained in the polycarbonate resin, moldability of the resin tends to be deteriorated. Further, when the remaining amount of the by-product alcohol-based compound such as the phenolic compound is large, a problem of odor may be caused at the time of molding the resin, and a cleavage reaction of a resin skeleton may proceed at the time of compounding, resulting in reduction in the molecular weight. Accordingly, it is preferred that the content of the remaining by-product alcohol-based compound in the obtained polycarbonate resin is 3000 mass ppm or less relative to the polycarbonate resin (100% by mass). The content of the remaining alcohol-based compound is preferably 3000 mass ppm or less, more preferably 1000 mass ppm or less, and particularly preferably 300 mass ppm or less relative to 100% by mass of the polycarbonate resin.

<Physical Properties of Thermoplastic Resin>

(1) Refractive Index (nD)

In one embodiment of the present invention, one of the characteristics of the thermoplastic resin is a high refractive index. The refractive index is preferably 1.500 to 1.700, more preferably 1.550 to 1.700, and particularly preferably 1.580 to 1.650. Further, in another embodiment of the present invention, it is also preferred that the refractive index is 1.560 to 1.610. In the present invention, the refractive index can be measured by the method described in the Examples below.

(2) Abbe Number (ν)

In one embodiment of the present invention, the Abbe number of the thermoplastic resin is preferably 22.0 to 35.0, more preferably 22.0 to 33.0, even more preferably 23.0 to 32.0, and particularly preferably 23.0 to 30.0. Further, in another embodiment of the present invention, it is also preferred that the Abbe number is 25.0 to 33.2. In the present invention, the Abbe number can be measured by the method described in the Examples below.

(3) Glass Transition Temperature (Tg)

In one embodiment of the present invention, one of the characteristics of the thermoplastic resin is high heat resistance, and the glass transition temperature (Tg) is preferably 135 to 160°C, more preferably 140 to 160°C, even more preferably 142 to 158°C, and particularly preferably 144 to 155°C. Further, in another embodiment of the present invention, the glass transition temperature (Tg) is preferably 110 to 210°C, more preferably 130 to 200°C, even more preferably 140 to 180°C, and particularly preferably 145 to 160°C. In the present invention, the glass transition temperature can be measured by the method described in the Examples below.

(4) Polystyrene-Equivalent Weight-Average Molecular Weight (Mw)

In one embodiment of the present invention, the polystyrene-equivalent weight-average molecular weight of the thermoplastic resin is preferably 10,000 to 100,000, more preferably 10,000 to 80,000, and particularly preferably 10,000 to 60,000.

(5) Photoelastic Coefficient

In one embodiment of the present invention, one of the characteristics of the thermoplastic resin is a low photoelastic coefficient. The photoelastic coefficient is preferably 25 to 45, more preferably 25 to 38, and particularly preferably 28 to 38. In the present invention, the photoelastic coefficient can be measured by the method described in the Examples below.

(6) Water Absorption Rate (%)

In one embodiment of the present invention, the water absorption rate of the thermoplastic resin is preferably 0.10 to 0.50%, and more preferably 0.20 to 0.45%. In the present invention, the water absorption rate can be measured by the method described in the Examples below.

(7) Dimensional Change Rate at Time of Water Absorption (%)

In one embodiment of the present invention, the dimensional change rate at the time of water absorption of the thermoplastic resin is preferably closer to 0%, and for example, it is preferably -0.1 to 0.10%, and more preferably -0.01 to 0.05%. In the present invention, the dimensional change rate at the time of water absorption can be measured by the method described in the Examples below.

< Thermoplastic resin composition >

Another embodiment of the present invention relates to a thermoplastic resin composition comprising the aforementioned thermoplastic resin and additives. The thermoplastic resin composition of the present embodiment may also comprise a resin other than the thermoplastic resin of the present invention comprising the aforementioned constituent unit (A), in a range in which such a resin does not impair the desired effects of the present embodiment. Such a resin is not particularly limited, and it may be, for example, at least one resin selected from the group consisting of a polycarbonate resin, a polyester resin, a polyester carbonate resin, a (meth)acrylic resin, a polyamide resin, a polystyrene resin, a cycloolefin resin, an acrylonitrile-butadiene-styrene copolymer resin, a vinyl chloride resin, a polyphenylene ether resin, a polysulfone resin, a polyacetal resin, and a methyl methacrylate-styrene copolymer resin. Various types of known resins can be used as such resins, and one type of such resin alone can be added to, or a combination of two or more types of such resins can be added to the thermoplastic resin composition.

[Antioxidant]

The thermoplastic resin composition preferably comprises an antioxidant as an additive described above.

As such an antioxidant, the thermoplastic resin composition preferably comprises at least one of a phenolic antioxidant and a phosphite-based antioxidant.

Examples of the phenolic antioxidant may include 1,3,5-tris(3,5-di-tert-butyl-4-hydroxyphenylmethyl)-2,4,6-trimethylbenzene, 1,3,5-tris(3,5-di-tert-butyl-4-hydroxybenzyl)-1,3,5-triazine-2,4,6(1H,3H,5H)-trione, 4,4',4"-(1-methylpropanyl-3-ylidene)tris(6-tert-butyl-m-cresol), 6,6'-di-tert-butyl-4,4'-butylidenedi-m-cresol, octadecyl 3-(3,5-di-tert-butyl-4-hydroxyphenyl)propionate, pentaerythritol-tetrakis[3-(3,5-di-tert-butyl-4-hydroxyphenyl)propionate], 3,9-bis {2-[3-(3-tert-butyl-4-hydroxy-5-methylphenyl)propionyloxy]-1,1-dimethylethyl}-2,4,8,10-tetraoxospiro[5.5]undecane, and pentaerythritol-tetrakis[3-(3,5-di-tert-butyl-4-hydroxyphenyl)propionate]. Among these, pentaerythritol-tetrakis [3-(3,5-di-tert-butyl-4-hydroxyphenyl)propionate] is preferable.

Examples of the phosphite-based antioxidant may include 2-ethylhexyl diphenyl phosphite, isodecyl diphenyl phosphite, triisodecyl phosphite, triphenyl phosphite, 3,9-bis(octadecyloxy)-2,4,8,10-tetraoxy-3,9-diphosphaspiro[5.5] undecane, 3,9-bis(2,6-di-tert-butyl-4-methylphenoxy)-2,4,8,10-tetraoxa-3,9-diphosphaspiro[5.5]undecane, 2,2'-methylenebis(4,6-di-tert-butylphenyl)2-ethylhexyl phosphite, tris(2,4-ditert-butylphenyl) phosphite, tris(nonylphenyl) phosphite, tetra-C12-15-alkyl(propane-2,2-diylbis(4,1-phenylene)) bis(phosphite), and 3,9-bis(2,6-di-tert-butyl-4-methylphenoxy)-2,4,8,10-tetraoxa-3,9-diphosphaspiro[5.5]undecane. Among these, 3,9-bis(2,6-di-tert-butyl-4-methylphenoxy)-2,4,8,10-tetraoxa-3,9-diphosphaspiro[5.5]undecane is preferable.

As such antioxidants, the aforementioned compounds may be used alone as a single type, or may also be used as a mixture of two or more types.

The antioxidant is preferably comprised in the thermoplastic resin composition in an amount of 1 ppm by weight to 3000 ppm by weight, with respect to the total weight of the resin composition. The content of the antioxidant in the thermoplastic resin composition is more preferably 50 ppm by weight to 2500 ppm by weight, further preferably 100 ppm by weight to 2000 ppm by weight, particularly preferably 150 ppm by weight to 1500 ppm by weight, and further particularly preferably 200 ppm by weight to 1200 ppm by weight.

[Release agent]

The thermoplastic resin composition preferably comprises a release agent as an additive described above.

Examples of the release agent may include ester compounds including glycerin fatty acid esters such as mono/diglyceride of glycerin fatty acid, glycol fatty acid esters such as propylene glycol fatty acid ester and sorbitan fatty acid ester, higher alcohol fatty acid esters, full esters of aliphatic polyhydric alcohol and aliphatic carboxy acid, and monofatty acid esters. When an ester of aliphatic polyhydric alcohol and aliphatic carboxy acid is used as a release agent, any of a monoester, a full ester, and the like can be adopted. For example, those other than full esters, such as a monoester, may be used.

Specific examples of the release agent may include the following substances: namely,

sorbitan fatty acid esters, such as sorbitan stearate, sorbitan laurate, sorbitan oleate, sorbitan trioleate, sorbitan tribehenate, sorbitan stearate, sorbitan tristearate, and sorbitan caprylate;
propylene glycol fatty acid esters, such as propylene glycol monostearate, propylene glycol monooleate, propylene glycol monobehenate, propylene glycol monolaurate, and propylene glycol monopalmitate;
higher alcohol fatty acid esters, such as stearyl stearate;
glycerin fatty acid ester monoglycerides, which include: monoglycerides including glycerin monostearate, glycerin monohydroxystearate such as glycerin mono-12-hydroxystearate, glycerin monooleate, glycerin monobehenate, glycerin monocaprylate, glycerin monocaprate and glycerin monolaurate; and mono/diglycerides including glycerin mono/distearate, glycerin mono/distearate, glycerin mono/dibehenate, glycerin mono/dioleate;
acetylated monoglycerides of glycerin fatty acid esters, such as glycerin diacetomonolaurate;
organic acid monoglycerides of glycerin fatty acid esters, such as citric acid fatty acid monoglyceride, succinic acid fatty acid monoglyceride, and diacetyl tartaric acid fatty acid monoglyceride; and
polyglycerin fatty acid esters, such as diglycerin stearate, diglycerin laurate, diglycerin oleate, diglycerin monostearate, diglycerin monolaurate, diglycerin monomyristate, diglycerin monooleate, tetraglycerin stearate, decaglycerin laurate, decaglycerin oleate, and polyglycerin polyricinoleate.

The release agent is preferably comprised in the thermoplastic resin composition in an amount of 1 ppm by weight to 5000 ppm by weight, with respect to the total weight of the resin composition. The content of the release agent in the thermoplastic resin composition is more preferably 50 ppm by weight to 4000 ppm by weight, further preferably 100 ppm by weight to 3500 ppm by weight, particularly preferably 500 ppm by weight to 13000 ppm by weight, and further particularly preferably 1000 ppm by weight to 2500 ppm by weight.

[Other additives]

Additives other than the aforementioned antioxidant and release agent may also be added to the thermoplastic resin composition. Examples of the additives that may be comprised in the thermoplastic resin composition may include a compounding agent, a catalyst inactivator, a thermal stabilizer, a plasticizer, a filler, an ultraviolet absorber, a rust inhibitor, a dispersant, an antifoaming agent, a leveling agent, a flame retardant, a lubricant, a dye, a pigment, a bluing agent, a nucleating agent, and a clearing agent.
The content of additives other than the antioxidant and the release agent in the thermoplastic resin composition is preferably 10 ppm by weight to 5.0% by weight, more preferably 100 ppm by weight to 2.0% by weight, and further preferably 1000 ppm by weight to 1.0% by weight, but is not limited thereto.
The aforementioned additives are likely to adversely affect transmittance. Thus, it is preferable not to add such additives excessively, and more preferably, the total additive amount is, for example, within the aforementioned range.

< Optical member >

The thermoplastic resin or the thermoplastic resin composition of the present invention (hereinafter simply abbreviated as a "resin composition") can be preferably used in an optical member. In one embodiment of the present invention, an optical member comprising the resin composition of the present invention is provided. In one embodiment of the present invention, the optical member may include, but is not limited to, an optical disk, a transparent conductive substrate, an optical card, a sheet, a film, an optical fiber, a lens, a prism, an optical film, a substrate, an optical filter, a hard coat film, and the like. The resin composition of the present invention has high fluidity, and can be molded according to a cast method. Hence, the present resin composition is preferably used, in particular, in production of a thin optical member. In a preferred embodiment of the present invention, the optical member produced using the resin composition of the present invention may be an optical lens. In another preferred embodiment of the present invention, the optical member produced using the resin composition of the present invention may be an optical film.
When an optical member comprising the resin composition of the present invention is produced according to injection molding, the optical member is preferably molded under conditions of a cylinder temperature of 260°C to 350°C and a mold temperature of 90°C to 170°C. The optical member is more preferably molded under conditions of a cylinder temperature of 270°C to 320°C and a mold temperature of 100°C to 160°C. When the cylinder temperature is higher than 350°C, the resin composition is decomposed and colored. On the other hand, when the cylinder temperature is lower than 260°C, the melt viscosity becomes high, and it easily becomes difficult to mold the optical member. Moreover, when the mold temperature is higher than 170°C, it easily becomes difficult to remove a molded piece consisting of the resin composition from a mold. On the other hand, when the mold temperature is lower than 90°C, the resin is hardened too quickly in a mold upon the molding thereof, and it becomes difficult to control the shape of a molded piece, or it easily becomes difficult to sufficiently transcribe a vehicle placed in a mold.

< Optical lens >

In one embodiment of the present invention, the resin composition can be preferably used in an optical lens. Since the optical lens produced using the resin composition of the present invention has a high refractive index and is excellent in terms of heat resistance, it can be used in fields in which expensive glass lenses having a high refractive index have been conventionally used, such as telescopes, binoculars and TV projectors, and thus, the optical lens produced using the present resin composition is extremely useful.

For instance, regarding a lens used for smart phones, a lens molded from a thermoplastic resin comprising the constituent unit (A) is overlapped with a lens molded from a resin comprising the constituent unit represented by any one of the formulae (II-1) to (II-4) or a resin comprising a constituent unit derived from a monomer represented by any one of the following formulae, so that the lenses can be used as a lens unit:

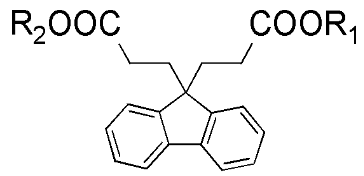

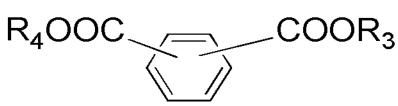

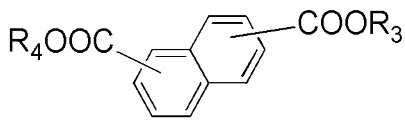

wherein, in the above formulae, $R_1$ and $R_2$ each independently represent a hydrogen atom, a methyl group or an ethyl group, and $R_3$ and $R_4$ each independently represent a hydrogen atom, a methyl group, an ethyl group, or alkylene glycol containing 2 to 5 carbon atom.

A lens molded from a resin containing a structural unit derived from any of the monomers of the above formula can be used as a lens unit by being superimposed on each other.

The optical lens of the present invention is preferably used in the shape of an aspherical lens, as necessary. Since the aspherical lens can reduce spherical aberration to substantially zero with a single lens thereof, it is not necessary to eliminate the spherical aberration by a combination of a plurality of spherical lenses, and thereby, it becomes possible to achieve weight saving and a reduction in production costs. Therefore, among the optical lenses, the aspherical lens is particularly useful as a camera lens.

Moreover, since the optical lens of the present invention has high molding fluidity, the present optical lens is particularly useful as a material of a thin and small optical lens having a complicated shape. Regarding the specific size of a lens, the thickness of the central portion is preferably 0.05 to 3.0 mm, more preferably 0.05 to 2.0 mm, and further preferably 0.1 to 2.0 mm. In addition, the diameter is preferably 1.0 mm to 20.0 mm, more preferably 1.0 to 10.0 mm, and further preferably , 3.0 to 10.0 mm. Further, regarding the shape thereof, the optical lens of the present invention is preferably a meniscus lens, in which one surface is a convex, and the other surface is a concave.

The optical lens of the present invention is molded according to any given method such as die molding, cutting, polishing, laser machining, electrical discharge machining, or etching. Among these methods, die molding is more preferable in terms of production costs.

< Optical film >

In one embodiment of the present invention, the resin composition can be preferably used in optical films. In particular, since the optical film produced using the polycarbonate resin of the present invention is excellent in terms of transparency and heat resistance, it can be preferably used for films for use in liquid crystal substrates, optical memory cards, etc.

In order to avoid the mixing of foreign matters into the optical lens, the molding environment must be naturally a low-dust environment, and the class is preferably 6 or less, and more preferably 5 or less.

EXAMPLES

Hereinafter, the present invention will be described in detail by way of working examples and comparative examples, but the present invention is not limited to the working examples. Values of physical properties of resins obtained were measured based on the below-described methods and apparatuses.

1) Weight-Average Molecular Weight (Mw)

The weight-average molecular weight of a resin obtained was measured according to the gel permeation chromatography (GPC) method and calculated based on standard polystyrene conversion. The apparatuses and columns used and measurement conditions are as described below.

GPC apparatus: HLC-8420GPC manufactured by Tosoh Corporation
Columns:

TSKgel SuperHM-M × 3, manufactured by Tosoh Corporation
TSKgel guardcolumn SuperH-H × 1, manufactured by Tosoh Corporation
TSKgel SuperH-RC × 1, manufactured by Tosoh Corporation
Detector: RI detector
Standard polystyrene: standard polystyrene kit PStQuick C manufactured by Tosoh Corporation
Sample solution: 0.2% by mass solution of tetrahydrofuran
Eluent: tetrahydrofuran
Flow rate of eluent: 0.6 mL/min
Column temperature: 40°C

2) Glass Transition Temperature (Tg)

Based on JIS K7121-1987, the measurement was carried out with a temperature raising program of 10°C/min using a differential scanning calorimeter.
Differential scanning calorimeter: DSC2500 manufactured by TA Instruments

3) Refractive Index (nD)

Based on JIS B 7071-2:2018, a V-block was obtained by molding a polycarbonate resin and used as a test piece. The refractive index was measured at 23°C using a refractometer (KPR-3000 manufactured by Shimadzu Corporation).

4) Abbe Number (ν)

Using the same test piece (V-block) as that used for the measurement of the refractive index, refractive indexes at wavelengths of 486 nm, 589 nm and 656 nm were measured at 23°C using a refractometer, and the Abbe number was calculated using the below-described formula.
Refractometer: KPR-3000 manufactured by Shimadzu Corporation

$$\nu=(nD-1)/(nF-nC)$$

nD: refractive index at a wavelength of 589 nm
nC: refractive index at a wavelength of 656 nm
nF: refractive index at a wavelength of 486 nm

5) Photoelastic Coefficient

A resin obtained was dissolved in dichloromethane to obtain a resin solution. This resin solution was spread in a vat, the solvent was evaporated, and thus a film having a thickness of 0.1 mm was obtained and used as a sample piece.
The photoelastic coefficient was measured using an ellipsometer.
Measurement method: The photoelastic coefficient was calculated by measuring the change in birefringence relative to change in load at a wavelength of 633 nm.
Ellipsometer: Ellipsometer M-220 manufactured by JASCO Corporation

6) Water Absorption Rate (%)

A test piece having a diameter of 50 mm and a thickness of 2 mm obtained by injection molding was dried at 110°C for 6 hours using a hot air dryer. After that, the mass of the test piece was measured and designated as M0. Next, the test piece was put into an environmental testing machine controlled at 85°C and 85% RH. After 72 hours, the test piece was

taken out, and the mass thereof was measured and designated as Mt. The water absorption rate (%) was calculated according to the formula below.

$$\text{Water absorption rate (\%)} = (Mt - M0)/M0 \times 100$$

Note that the mass measurement was carried out in an environment in which the temperature was controlled to 23°C±2°C (21°C to 25°C).

7) Dimensional Change Rate at Time of Water Absorption (%)

A test piece having a diameter of 50 mm and a thickness of 2 mm obtained by injection molding was dried at 110°C for 6 hours using a hot air dryer. After that, the size of the test piece was measured and designated as D0. Next, the test piece was put into an environmental testing machine controlled at 85°C and 85% RH. After 72 hours, the test piece was taken out, and the size thereof was measured and designated as Dt. The dimensional change rate at the time of water absorption (%) was calculated according to the formula below.

$$\text{Dimensional change rate (\%)} = (Dt - D0)/D0 \times 100$$

Note that the size measurement was carried out in an environment in which the temperature was controlled to 23°C±2°C (21°C to 25°C).

(Example 1-1)

As raw materials, 16.694 g (0.0381 mol) of 9,9-bis[4-(2-hydroxyethoxy)phenyl]fluorene (BPEF), 8.7912 g (0.0163 mol) of 4,4'-[1,3-phenylenebis(1-methylethylidene)]bis[2-cyclohexyl-5-methylphenol] (Bis3M6C-M), 12.000 g (0.0560 mol) of diphenyl carbonate (DPC), and 20 μl of $10^{-2}$ mol/l sodium hydrogen carbonate solution ($5.0\times10^{-7}$ mol) were put in a 300 mL reactor equipped with a stirrer and a distillation apparatus, and substitution with nitrogen in the system was carried out. The reactor was immersed in an oil bath heated to 200°C to start a transesterification reaction. Over 140 minutes, the temperature was raised to 240°C while the pressure was reduced to 0.1 kPa or lower, and after maintaining the conditions for 30 minutes, nitrogen gas was introduced into the reaction system and the pressure was recovered to 101.3 kPa, thereby obtaining a polycarbonate resin. Physical properties of the obtained resin are shown in Table 1.

(Examples 1-2 to 1-6, Comparative Example 1)

A polycarbonate resin was obtained in a manner similar to that in Example 1-1, except that the dihydroxy compounds (diols) in the raw materials were those shown in Table 1. Physical properties of the obtained resin are shown in Table 1.

| Table 1 | | | | | | Physical properties | | | | | |
|---|---|---|---|---|---|---|---|---|---|---|---|
| | Bis3M6C-M 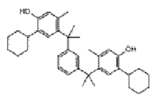 | BPM 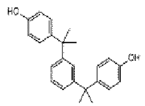 | BPEF 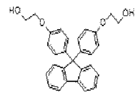 | BNE 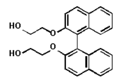 | OPPFL (2EO) 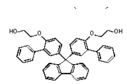 | nD | v | Tg | Mw | Photoelastic coefficient | Water absorption rate |
| [Unit] | [mol%] | [mol%] | [mol%] | [mol%] | [mol%] | [-] | [-] | [°C] | [-] | [-] | [%] |
| Example 1-1 | 30 | 0 | 70 | 0 | 0 | 1.608 | 26.29 | 151 | 26800 | 29.1 | 0.41 |
| Example 1-2 | 15 | 0 | 85 | 0 | 0 | 1.623 | 24.86 | 150 | 27900 | 31.7 | 0.45 |
| Example 1-3 | 60 | 0 | 40 | 0 | 0 | 1.582 | 29.37 | 155 | 30500 | 21.4 | 0.34 |
| Example 1-4 | 30 | 0 | 0 | 0 | 70 | 1.626 | 23.70 | 153 | 28400 | 37.4 | 0.38 |
| Example 1-5 | 15 | 15 | 0 | 0 | 70 | 1.634 | 23.31 | 147 | 35200 | 42.1 | 0.37 |
| Example 1-6 | 10 | 10 | 0 | 55 | 25 | 1.642 | 22.17 | 141 | 36500 | 51.9 | 0.41 |
| Comparative Example 1 | 0 | 30 | 70 | 0 | 0 | 1.626 | 24.87 | 134 | 39900 | 38.5 | 0.43 |

(Example 2-1)

<Process 1>

33.5 g (0.0967 mol) of bisphenol M (BPM), 39.1 g (0.0725 mol) of Bis3M6CM, and 27.4 g (0.0725 mol) of BCFL were put in 490 ml of 9% (w/w) aqueous solution of sodium hydroxide, and 0.5 g of hydrosulfite was further added thereto and dissolved. To this solution, 300 ml of dichloromethane and 0.1 g of triethylbenzylammonium chloride (TEBAC) were added, and while stirring, the temperature of the solution was set at 20°C, and 47.9 g of phosgene was injected over 30 minutes.

<Process 2>

After the injection of phosgene was completed, 1.61 g of p-tert-butylphenol (PTBP) dissolved in 50 ml of dichloromethane was added, and the mixture was vigorously stirred for 7 minutes to perform emulsification, and then 0.5 ml of triethylamine as a polymerization catalyst was added to perform polymerization for 30 minutes.

<Post-process>

The polymerization solution was separated into an aqueous layer and an organic layer, the organic layer was neutralized with phosphoric acid, and washing with pure water was repeated until the pH of wash liquid became 7.0. From this purified polycarbonate resin, the organic solvent was distilled off to obtain a polycarbonate resin powder. The polycarbonate resin powder was dried at 120°C for 24 hours to completely distill off the solvent. Physical properties of the obtained resin are shown in Table 2.

(Examples 2-2 to 2-7, Comparative Example 2)

A polycarbonate resin was obtained in a manner similar to that in Example 2-1, except that the dihydroxy compounds (diols) in the raw materials were those shown in Table 2. Physical properties of the obtained resin are shown in Table 2.

| Table 2 | | | | | Physical properties | | | | |
|---|---|---|---|---|---|---|---|---|---|
| | Bis3M6C-M 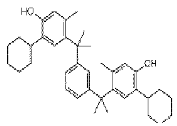 | BPM 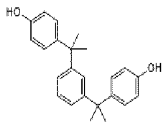 | BCFL 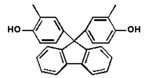 | BPA 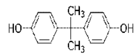 | nD | v | Tg | Mw | Water absorption rate |
| [Unit] | [mol%] | [mol%] | [mol%] | [mol%] | [-] | [-] | [°C] | [-] | [%] |
| Example 2-1 | 40 | 30 | 30 | 0 | 1.588 | 28.60 | 151 | 39200 | 0.31 |
| Example 2-2 | 50 | 0 | 0 | 50 | 1.561 | 32.77 | 154 | 44100 | 0.27 |
| Example 2-3 | 70 | 30 | 0 | 0 | 1.563 | 33.10 | 144 | 42400 | 0.22 |
| Example 2-4 | 50 | 50 | 0 | 0 | 1.569 | 32.42 | 132 | 35100 | 0.31 |
| Example 2-5 | 30 | 70 | 0 | 0 | 1.572 | 31.46 | 117 | 44600 | 0.20 |
| Example 2-6 | 30 | 0 | 70 | 0 | 1.603 | 26.00 | 204 | 31400 | 0.40 |
| Example 2-7 | 50 | 0 | 50 | 0 | 1.586 | 28.21 | 191 | 42700 | 0.34 |
| Comparative Example 2 | 0 | 70 | 30 | 0 | 1.601 | 27.26 | 128 | 35300 | 0.30 |

(Example 3-1)

As raw materials, 8543.3 g (19.5 mol) of 9,9-bis[4-(2-hydroxyethoxy)phenyl]fluorene (BPEF), 4500.0 g (8.4 mol) of 4,4'-[1,3-phenylenebis(1-methylethylidene)]bis[2-cyclohexyl-5-methylphenol] (Bis3M6C-M), 6142.5 g (28.7 mol) of diphenyl carbonate (DPC), and 5.5 ml of $1.0\times10^{-1}$ mol/l sodium hydrogen carbonate solution ($5.5\times10^{-4}$ mol) were put into a 50 L reactor equipped with a stirrer and a distillation apparatus. After that, substitution with nitrogen in the reaction system was carried out, and the mixture was heated to 180°C over 30 minutes under nitrogen atmosphere (760 Torr) and stirred.
After the raw materials were completely dissolved, the temperature was increased to 190°C over 20 minutes and then the pressure reducing degree was adjusted to 200 Torr. Conditions were kept at 190°C and 200 Torr for 20 minutes to perform a transesterification reaction. Further, the temperature was increased to 220°C at a rate of 30°C/hr, and the pressure reducing degree was adjusted to 150 Torr.
After that, the temperature was increased to 240°C at a rate of 60°C/hr, and the pressure reducing degree was adjusted to 100 Torr. Further, the pressure reducing degree was adjusted to 1 Torr or less over 40 minutes, and stirring was performed under conditions of 240°C and 1 Torr for 30 minutes to perform a polymerization reaction. After the reaction was completed, nitrogen was introduced into the reactor to increase the pressure, and a polycarbonate resin produced was taken out therefrom while being pelletized by a pelletizer.
The obtained pellet of the polycarbonate resin was dried at 100°C for 3 hours, and pentaerythritol-tetrakis[3-(3,5-di-tert-butyl-4-hydroxyphenyl)propionate] (ADK STAB AO-60 manufactured by ADEKA Corporation) was added so that the amount thereof became 1000 ppm relative to the polycarbonate resin, and in addition, glycerin monostearate (monoglyceride stearate, S-100A manufactured by Riken Vitamin Co., Ltd.) was added so that the amount thereof became 1000 ppm relative to the polycarbonate resin, and then the mixture was kneaded by a twin screw extruder. Physical properties of the obtained resin are shown in Table 3. Details regarding extrusion are as described below.

Twin screw extruder: IPT-35 manufactured by IPEC
Resin temperature: 260°C
Discharge rate: 20 kg/h
Screw rotation speed: 200 rpm

(Examples 3-2 to 3-6, Comparative Example 3)

A polycarbonate resin was obtained in a manner similar to that in Example 3-1, except that the dihydroxy compounds (diols) in the raw materials were those shown in Table 3. Physical properties of the obtained resin are shown in Table 3.

| Table 3 | | | | | | Physical properties | | | | | |
|---|---|---|---|---|---|---|---|---|---|---|---|
| | Bis3M6C-M 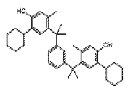 | BPM 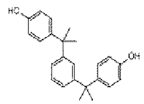 | BPEF 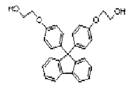 | BNE 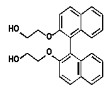 | OPPFL (2EO) 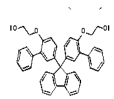 | nD | v | Tg | Mw | Water absorption rate | Dimensional change rate at the time of water absorption |
| [Unit] | [mol%] | [mol%] | [mol%] | [mol%] | [mol%] | [-] | [-] | [°C] | [-] | [%] | [%] |
| Example 3-1 | 30 | 0 | 70 | 0 | 0 | 1.608 | 26.31 | 151 | 45700 | 0.40 | 0.041 |
| Example 3-2 | 60 | 0 | 40 | 0 | 0 | 1.582 | 29.48 | 157 | 55400 | 0.31 | 0.026 |
| Example 3-3 | 70 | 0 | 30 | 0 | 0 | 1.574 | 30.50 | 159 | 51300 | 0.28 | 0.016 |
| Example 3-4 | 50 | 0 | 0 | 0 | 50 | 1.605 | 25.92 | 159 | 58100 | 0.31 | 0.024 |
| Example 3-5 | 30 | 0 | 10 | 30 | 30 | 1.622 | 23.86 | 144 | 48000 | 0.39 | 0.041 |
| Example 3-6 | 70 | 30 | 0 | 0 | 0 | 1.563 | 33.11 | 145 | 41000 | 0.22 | -0.001 |
| Comparative Example 3 | 0 | 30 | 70 | 0 | 0 | 1.626 | 24.87 | 134 | 39900 | 0.43 | 0.048 |

Regarding the system of Bis3M6C-M/BPEF or OPPFL(2EO), a system including 30 mol% or more of Bis3M6-M is preferred because the water absorption rate and the dimensional change rate at the time of water absorption are low.

Regarding the system of Bis3M6C-M/BPM, a system including more than 50 mol% of Bis3M6C-M (particularly the case of 70/30) is preferred because the water absorption rate and the dimensional change rate at the time of water absorption are low.

## Claims

1. A thermoplastic resin comprising a structural unit (A) derived from a monomer represented by formula (1):

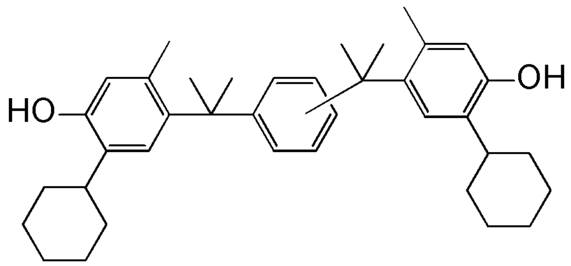

(1)

2. The thermoplastic resin according to claim 1, wherein the monomer represented by formula (1) is a monomer represented by formula (5):

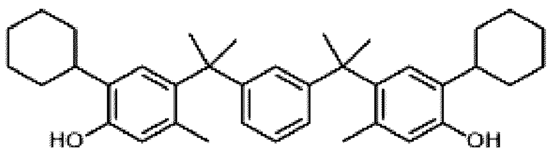

(5)

3. The thermoplastic resin according to claim 1 or 2, which is a polycarbonate resin, a polyester carbonate resin, or a polyester resin.

4. The thermoplastic resin according to any one of claims 1 to 3, which comprises a structural unit (B) derived from a monomer represented by general formula (6) and/or a structural unit (C) derived from a monomer represented by general formula (7):

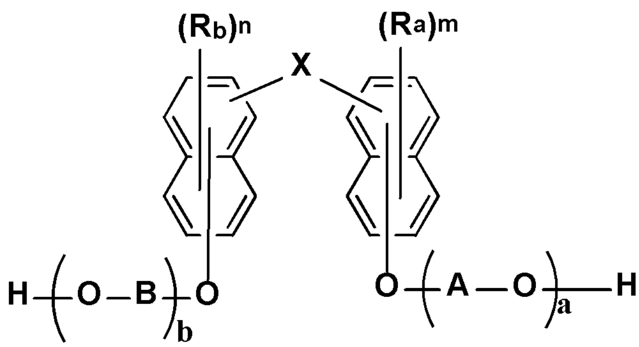

(6)

wherein in general formula (6):

$R_a$ and $R_b$ are each independently selected from the group consisting of a hydrogen atom; a halogen atom; a substituted or unsubstituted alkyl group having 1 to 20 carbon atoms; a substituted or unsubstituted alkoxyl group having 1 to 20 carbon atoms; a substituted or unsubstituted cycloalkyl group having 5 to 20 carbon atoms; a substituted or unsubstituted cycloalkoxyl group having 5 to 20 carbon atoms; a substituted or unsubstituted aryl group having 6 to 20 carbon atoms; a substituted or unsubstituted

heteroaryl group having 6 to 20 carbon atoms which contains at least one heterocyclic atom selected from **O,** N and S;

a substituted or unsubstituted aryloxy group having 6 to 20 carbon atoms; and -C≡C-$R_h$;

$R_h$ represents a substituted or unsubstituted aryl group having 6 to 20 carbon atoms, or a substituted or unsubstituted heteroaryl group having 6 to 20 carbon atoms which contains at least one heterocyclic atom selected from **O,** N and S;

X represents a single bond or a substituted or unsubstituted fluorene group;

A and B each independently represent a substituted or unsubstituted alkylene group having 1 to 5 carbon atoms;

m and n each independently represent an integer of 0 to 6; and

a and b each independently represent an integer of 0 to 10,

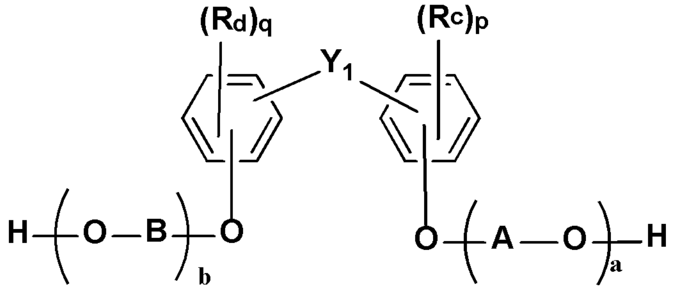

(7)

wherein in general formula (7):

$R_c$ and $R_d$ are each independently selected from the group consisting of a hydrogen atom, a halogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, a substituted or unsubstituted cycloalkoxyl group having 5 to 20 carbon atoms, and a substituted or unsubstituted aryl group having 6 to 20 carbon atoms;

$Y_1$ represents a single bond, a substituted or unsubstituted fluorene group, or any one of structural formulae represented by formulae (8) to (15):

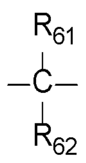

$-S-$

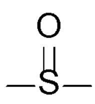

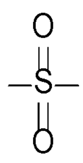

$-(CH_2)_r-$

$-O-$

(8) (9) (10) (11) (12) (13)

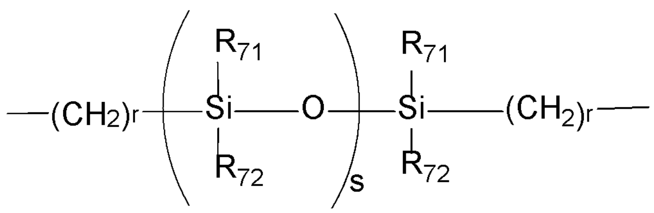

(14)

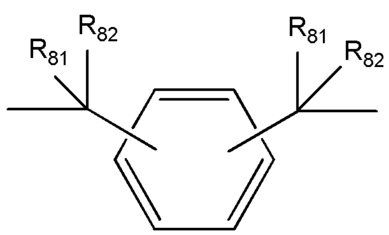

(15)

wherein in formulae (8) to (15):

$R_{61}$, $R_{62}$, $R_{71}$, $R_{72}$, $R_{81}$ and $R_{82}$ each independently represent a hydrogen atom, a halogen atom, a substituted or unsubstituted alkyl group having 1 to 20 carbon atoms, or a substituted or unsubstituted aryl group having 6 to 30 carbon atoms, or represent a substituted or unsubstituted carbocyclic ring or heterocyclic ring having 1 to 20 carbon atoms, wherein $R_{61}$ and $R_{62}$, or $R_{71}$ and $R_{72}$, are bonded to each other, and
r and s each independently represent an integer of 0 to 5000;

A and B each independently represent a substituted or unsubstituted alkylene group having 1 to 5 carbon atoms;
p and q each independently represent an integer of 0 to 4; and
a and b each independently represent an integer of 0 to 10.

5. The thermoplastic resin according to claim 4, wherein in general formula (6) and general formula (7), A and B each independently represent an alkylene group having 2 or 3 carbon atoms.

6. The thermoplastic resin according to claim 4 or 5, which comprises at least a structural unit derived from any one of BPEF, BNE, BNEF, DPBHBNA, BPM and BCFL.

7. The thermoplastic resin according to any one of claims 1 to 6, which further comprises a structural unit derived from at least one monomer selected from the group of monomers below:

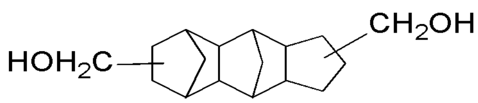
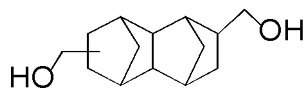
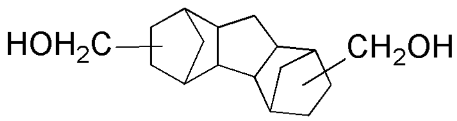
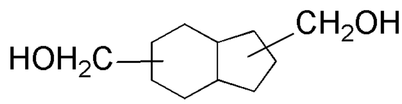
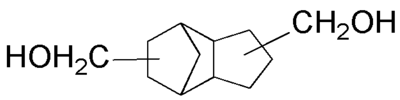
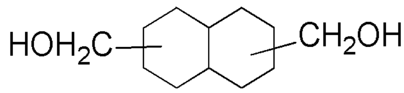
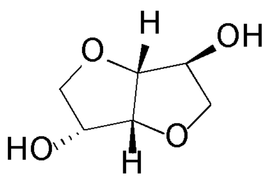
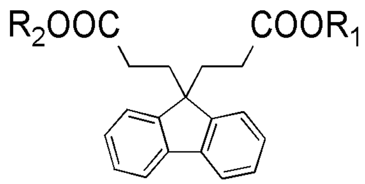
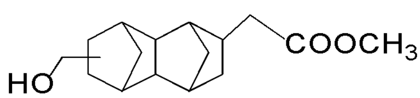
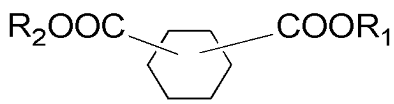
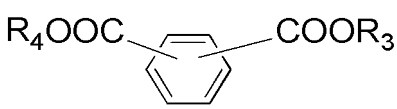
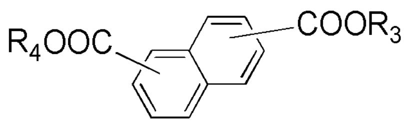

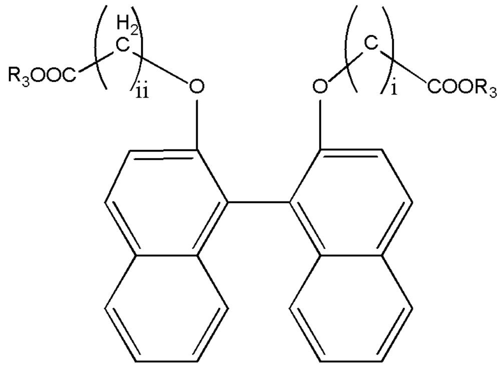

wherein in the formulae: $R_1$ and $R_2$ each independently represent a hydrogen atom, a methyl group or an ethyl group; $R_3$ and $R_4$ each independently represent a hydrogen atom, a methyl group, an ethyl group or an alkylene glycol having 2 to 5 carbon atoms; and i and ii each independently represent an integer of 1 to 3.

**8.** The thermoplastic resin according to any one of claims 1 to 7, wherein a polystyrene-equivalent weight-average molecular weight (Mw) of the thermoplastic resin is 10,000 to 100,000.

**9.** The thermoplastic resin according to any one of claims 1 to 8, wherein a refractive index (nD) of the thermoplastic resin is 1.500 to 1.700.

**10.** The thermoplastic resin according to any one of claims 1 to 9, wherein an Abbe number (v) of the thermoplastic resin is 22.0 to 35.0.

**11.** The thermoplastic resin according to any one of claims 1 to 10, wherein a glass transition temperature of the thermoplastic resin is 135 to 160°C.

**12.** The thermoplastic resin according to any one of claims 1 to 11, wherein a photoelastic coefficient of the thermoplastic resin is 25 to 45.

**13.** The thermoplastic resin according to any one of claims 1 to 12, wherein a water absorption rate of the thermoplastic resin is 0.10 to 0.50%.

**14.** The thermoplastic resin according to any one of claims 1 to 13, wherein a dimensional change rate at the time of water absorption of the thermoplastic resin is -0.1 to 0.10%.

**15.** An optical lens comprising the thermoplastic resin according to any one of claims 1 to 14.

## INTERNATIONAL SEARCH REPORT

International application No. **PCT/JP2023/045642**

**A. CLASSIFICATION OF SUBJECT MATTER**

***C08G 64/04***(2006.01)i; ***C08G 63/64***(2006.01)i; ***C08G 63/199***(2006.01)i; ***G02B 1/04***(2006.01)i
FI: C08G64/04; C08G63/64; C08G63/199; G02B1/04

According to International Patent Classification (IPC) or to both national classification and IPC

**B. FIELDS SEARCHED**

Minimum documentation searched (classification system followed by classification symbols)

C08G64/04; C08G63/64; C08G63/199; G02B1/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 9-143115 A (HONSHU CHEMICAL IND) 03 June 1997 (1997-06-03) claims, examples | 1-3, 8-14 |
| Y | | 4-7, 15 |
| Y | JP 2005-232252 A (TEIJIN CHEMICALS LTD.) 02 September 2005 (2005-09-02) claims, paragraph [0027], examples | 4-7, 15 |
| Y | JP 2019-143152 A (MITSUBISHI GAS CHEMICAL COMPANY, INC.) 29 August 2019 (2019-08-29) claims, paragraphs [0017], [0018], examples | 4-7, 15 |
| P, A | WO 2023/195504 A1 (MITSUBISHI GAS CHEMICAL COMPANY, INC.) 12 October 2023 (2023-10-12) entire text | 1-15 |
| P, A | JP 2023-138918 A (MITSUBISHI GAS CHEMICAL COMPANY, INC.) 03 October 2023 (2023-10-03) entire text | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/045642**

| Patent document cited in search report | Publication date (day/month/year) | Patent family member(s) | Publication date (day/month/year) |
|---|---|---|---|
| JP 9-143115 A | 03 June 1997 | (Family: none) | |
| JP 2005-232252 A | 02 September 2005 | (Family: none) | |
| JP 2019-143152 A | 29 August 2019 | US 2018/0307052 A1<br>claims, paragraphs [0027], [0028], examples<br>US 2019/0235258 A1<br>WO 2017/078074 A1<br>EP 3372627 A1<br>EP 3536728 A1<br>TW 201731904 A<br>KR 10-2018-0079359 A<br>CN 108350163 A<br>KR 10-2019-0041544 A<br>CN 110256661 A<br>TW 201934604 A<br>CN 113248697 A<br>TW 202140608 A | |
| WO 2023/195504 A1 | 12 October 2023 | (Family: none) | |
| JP 2023-138918 A | 03 October 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018002893 A
- JP 2018002894 A
- JP 2018002895 A
- JP 2018059074 A
- WO 2017078073 A
- JP 3673574 B